# EUROPEAN PATENT SPECIFICATION

(11) **EP 4 280 007 B1**
(45) Date of publication and mention of the grant of the patent: **22.01.2025**
(21) Application number: 23172193.7
(22) Date of filing: 09.05.2023
(51) Int. Cl.: G05B 23/02

(54) **APPPARATUS, METHOD AND PROGRAM FOR MONITORING A TARGET DEVICE**
VORRICHTUNG, VERFAHREN UND PROGRAMM ZUR ÜBERWACHUNG EINES GERÄTS
APPAREIL, PROCÉDÉ ET PROGRAMME POUR LA SURVEILLANCE D`UN DISPOSITIF

(30) Priority: 16.05.2022 JP 2022080516
(43) Date of publication of application: 22.11.2023
(73) Proprietor: Yokogawa Electric Corporation, Musashino-shi, Tokyo 180-8750 (JP)
(72) Inventor: LIN, Yanyan, Tokyo, 180-8750 (JP); KIMURA, Ryosuke, Tokyo, 180-8750 (JP)
(74) Representative: Hoffmann Eitle

(56) References cited:
- EP-A1- 3 690 581
- WO-A1-2022/069258
- US-A1- 2019 095 781

## Description

### BACKGROUND

### 1. TECHNICAL FIELD

The present invention relates to an apparatus, a method and a program.

### 2. RELATED ART

Patent Document 1 describes "the output unit 12c uses the sensor data collected by the collection unit 12a as an input and outputs an abnormality degree of each detection target instrument 20 by using each model".

WO2022069258A1 relates to a device for identifying anomalies in an industrial system (1) for carrying out a production process (3) for a product, wherein the system comprises a multiplicity of sensors (7) for measuring process variables of the production process (3), comprises an anomaly detector (16) having at least one trained artificial intelligence (18). Said artificial intelligence is designed and trained to detect and/or to predict anomalies in the production process (3) based on a multiplicity of measured data (M) from the sensors (7). Upon detecting and/or predicting an anomaly, the anomaly detector (16) outputs anomaly information (A). Anomalies may in this case be detected and predicted at the same time in multiple different performance indicators (La - Ld) of the production process (3), wherein the performance indicators (La - Ld) each relate to the entire production process (3) for the production of the product.

US2019095781A1 relates to techniques, including systems and methods for monitoring a rotating equipment. A sensor that is in proximity of the rotating equipment senses vibrations of the rotating equipment. The sensor generates a digital signal corresponding to the vibrations of the rotating equipment and transmits the digital signal over a communication network. A server receives the digital signal and pre-processes the digital signal using ensemble empirical mean decomposition (EEMD) technique. The server processes the digital signal using wavelet neural network (WNN) to detect faults in the rotating equipment. Further, the server processes the digital signal using the wavelet neural network to predict remaining useful life (RUL) of the rotating equipment.

EP3690581A1 relates to a method and system for detecting anomalies in sensory data originating from components used in industrial processes. The anomaly detection steps comprise (i) obtaining process and alarm/fault data from a component or group of components, (ii) learning typical frequency of abnormal operation or alarm/faults, (iii) comparing new data to the learned normal operation, and (iv) identifying as anomalous based on a threshold value which can be tuned. The invention also provides a novel, automated and efficient alarm monitoring, detection and visualization unique to the application.

### PRIOR ART DOCUMENT

### PATENT DOCUMENT

Patent Document 1: Patent No. 6453504

### SUMMARY

The object is achieved by the subject-matter of the independent claims. Advantageous embodiments are defined by the dependent claims. Examples are provided to facilitate the understanding of the present disclosure. A first example provides an apparatus according to claim 1.

The above apparatus may further include a normalization unit configured to normalize each measurement data included in at least one group. The supplying unit may supply, to the model, abnormal measurement data normalized by the normalization unit and specified for each group by the specifying unit.

The above apparatus may further include a normalization unit configured to normalize each measurement data included in at least one group. The apparatus may further include a learning processing unit configured to perform learning processing of the model by using learning data including measurement data of each group normalized by the normalization unit and the state index value.

In any one of the above apparatuses, the supplying unit may supply the each of the abnormal measurement data specified for each group by the specifying unit to the model corresponding to a combination pattern of the abnormal measurement data among a plurality of models including the model provided for each combination pattern of measurement data selected one type by one type from each group, and configured to output, in response to each measurement data of a corresponding combination pattern being input, the state index value.

The apparatus may further include a learning processing unit configured to perform, for each combination pattern of measurement data selected one type by one type from each group, learning processing of the model configured to output, in response to each measurement data of the combination pattern being input, the state index value by using learning data including each measurement data included in the combination pattern and the state index value.

A second example provides a method according to claim 8.

In a third example, a programm according to claim 9 is provided.

The summary of the invention described above does not necessarily describe all necessary features of the embodiments of the present invention. In addition, the present invention may also be a sub-combination of the features described above.

### BRIEF DESCRIPTION OF THE DRAWINGS

Fig. 1 shows a system 1 according to an embodiment.
Fig. 2 shows a data structure of a group information file 431.
Fig. 3 shows an operation of an apparatus 4 when performing learning processing of a model 435.
Fig. 4 shows an operation of the apparatus 4 when using the model 435.
Fig. 5 shows a system 1A according to a variation.
Fig. 6 shows an example of a computer 2200 in which a plurality of aspects of the present invention may be entirely or partially embodied.

### DESCRIPTION OF EXEMPLARY EMBODIMENTS

Hereinafter, an embodiment of the present invention will be described. The embodiment does not limit the invention according to the claims. In addition, not all combinations of features described in the embodiment are essential to the solution of the invention.

### 1. CONFIGURATION OF SYSTEM 1

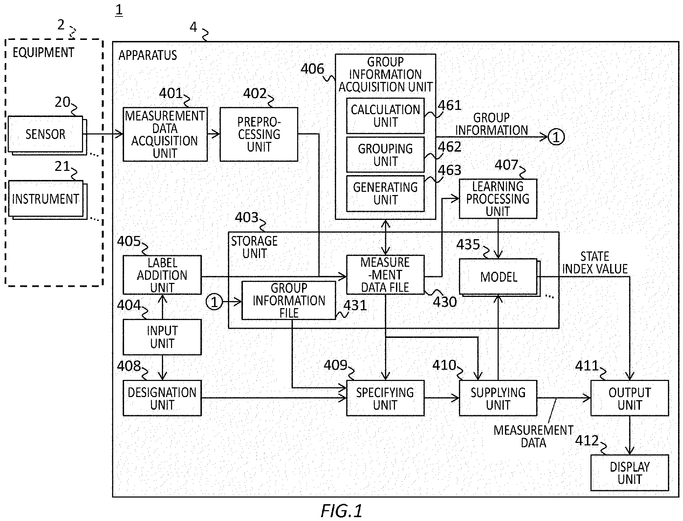

Fig. 1 shows a system 1 according to the present embodiment. The system 1 supports state monitoring of a target, and includes a piece of equipment 2 as an example of the target, and an apparatus 4.

### 1.1. EQUIPMENT 2

The equipment 2 is provided with a plurality of sensors 20. For example, the equipment 2 may be a plant provided with a plurality of instruments 21, or may be a composite apparatus obtained by combining a plurality of instruments 21. Examples of the plant may include a plant for managing and controlling wellheads such as a gas field and an oilfield and surroundings thereof, a plant for managing and controlling power generations such as hydroelectric, thermo electric and nuclear power generations, a plant for managing and controlling environmental power generation such as solar power and wind power, a plant for managing and controlling water and sewerage, a dam and the like, and the like, in addition to industrial plants such as chemical and bio industrial plants.

### 1.1-1. INSTRUMENT 21

Each instrument 21 is an implement, a machine, or an apparatus, and may be, for example, an actuator such as a valve, a pump, a heater, a fan, a motor, or a switch configured to control at least one physical quantity such as pressure, temperature, pH, speed, or flow rate in a process of the equipment 2. Respective instruments 21 may be of different types, or at least some (two or more) instruments 21 may be of the same type.

### 1.1-2. SENSOR 20

Each sensor 20 measures a state of the equipment 2. The sensor 20 may measure at least one physical quantity such as pressure, temperature, pH, speed, flow rate, and the like. In addition, the sensor 20 may measure the yield of the equipment 2, the proportion of impurities to be mixed, the operation status of each instrument 21, and the like. The sensors 20 may be of different types, or at least some (two or more) of the sensors 20 may be of the same type. As an example, the two or more sensors 20 may be temperature sensors provided at separate positions in a furnace in the equipment 2. Among a plurality of measurement data that is measured by the plurality of sensors 20, some measurement data may show a high correlation with another measurement data. Each sensor 20 may supply measurement data to the apparatus 4.

Note that communication between the sensor 20 and the apparatus 4 may be performed by, for example, a communication protocol of the International Society of Automation (ISA), and as an example, at least one of ISA100, or Wireless HART (Highway Addressable Remote Transducer) (registered trademark) or the like of wireless communication protocols, or at least one of BRAIN (registered trademark), FOUNDATION Fieldbus, or PROFIBUS or the like of wire communication protocols.

### 1.2. APPARATUS 4

The apparatus 4 may perform learning processing of a model 435 by using measurement data. In addition to or instead of this, the apparatus 4 may support monitoring of the equipment 2 by using the model 435 for which learning has been performed. The apparatus 4 includes a measurement data acquisition unit 401, a preprocessing unit 402, a storage unit 403, an input unit 404, a label addition unit 405, a group information acquisition unit 406, a learning processing unit 407, a designation unit 408, a specifying unit 409, a supplying unit 410, an output unit 411, and a display unit 412.

### 1.2.1. MEASUREMENT DATA ACQUISITION UNIT 401

The measurement data acquisition unit 401 acquires a plurality of types of measurement data representing a state of the equipment 2. The measurement data acquisition unit 401 may sequentially acquire each type of measurement data from each sensor 20. The measurement data acquisition unit 401 may collectively acquire measurement data measured in advance by each sensor 20 from an external storage apparatus (not shown). When the sensor 20 is not performing measurement due to replacement, failure or the like, the measurement data acquisition unit 401 does not need to acquire the measurement data from the sensor 20. The type of measurement data may be different for each sensor 20, as an example, in the present embodiment, but may be different depending on a target physical quantity.

The measurement data acquisition unit 401 may add a measurement time and identification information (also referred to as a measurement data ID or a tag) about measurement data to the acquired measurement data. The measurement data ID may be identification information about the sensor 20 having measured the measurement data. The measurement time of the measurement data may be a time at which the measurement data is measured, or may be an acquisition time of the measurement data by the measurement data acquisition unit 401. The measurement time and the measurement data ID may be added in advance to the measurement data that is supplied from the sensor 20. The measurement data acquisition unit 401 may store the acquired measurement data in a measurement data file 430 via the preprocessing unit 402.

### 1.2.2. PREPROCESSING UNIT 402

The preprocessing unit 402 performs so-called preprocessing on the measurement data. The preprocessing unit 402 may store the measurement data after preprocessing in the measurement data file 430 of the storage unit 403. In addition to or instead of this, the preprocessing unit 402 may read out measurement data stored in the measurement data file 430, to perform preprocessing on the measurement data, and to store the preprocessed measurement data in the measurement data file 430, as the measurement data after preprocessing. In the present embodiment, as an example, the measurement data after preprocessing may be read by the group information acquisition unit 406, the learning processing unit 407, the specifying unit 409, and the supplying unit 410, which will be described later.

The preprocessing that is performed by the preprocessing unit 402 may be at least one of outlier processing, normalization processing, or missing value processing, which are conventionally known, or in addition to or instead of this, another preprocessing may also be performed. The outlier processing may be processing of excluding an outlier from measurement data, or processing of correcting an outlier to a value within a range preset for each type of measurement data. The normalization processing may be processing of correcting each type of measurement data to a value within a common range among a plurality of types of measurement data (as an example, processing of scaling each type of measurement data to a range of 0 to 1). The normalization processing may include processing of scaling an average of measurement data to 0 and a variance to 1, i.e., standardization processing. The missing value processing may be, when one measurement data is missing, processing of deleting another measurement data to which the same measurement time as that of the one measurement data is added, or processing of supplementing the one measurement data.

### 1.2.3. STORAGE UNIT 403

The storage unit 403 stores various pieces of information. For example, the storage unit 403 may store a measurement data file 430, a group information file 431, and a plurality of models 435.

### 1.2.3-1. MEASUREMENT DATA FILE 430

The measurement data file 430 stores measurement data supplied from the measurement data acquisition unit 401. The measurement data may have been preprocessed by the preprocessing unit 402.

### 1.2.3-2. GROUP INFORMATION FILE 431

The group information file 431 stores group information representing a group (also referred to as a measurement data group) of measurement data having a higher correlation than a reference among a plurality of types of measurement data acquired by the measurement data acquisition unit 401. Note that, even when measurement data are included in the same measurement data group, any one of the measurement data may be relatively abnormal and the correlation thereof may be temporarily lowered.

The group information may represent each of measurement data having a lower correlation with each of other measurement data than a reference among a plurality of types of measurement data, as a separate measurement data group, i.e., as a measurement data group of a single element. The group information may be supplied from the group information acquisition unit 406, which will be described later.

### 1.2.3-3. MODEL 435

Each model 435 outputs a state index value representing a quality of a state of the equipment 2, in response to any one type of measurement data being input for each measurement data group represented by the group information. In the present embodiment, as an example, each model 435 may be provided for each combination pattern of measurement data selected one type by one type from each measurement data group, and may output the state index value, in response to each measurement data of a corresponding combination pattern being input. Identification information (also referred to as a pattern ID) of a corresponding combination pattern may be added to each model 435.

Here, each model 435 may output a state index value (also referred to as a health index) that is not binarized with a value representing that the equipment 2 is in a good state and a value representing that the equipment is in a poor state. For example, the model 435 may be a model for which learning has been performed using two values: a value representing that the equipment 2 is in a good state and a value representing that the equipment 2 is in a poor state, and may output a state index value before binarization by comparison with a threshold. In the present embodiment, as an example, the state index value may be a positive value when the equipment 2 is in a good state (or when it is in a nearly good state), and the state index value may be a negative value when the equipment 2 is in a poor state (or when it is in a nearly poor state). The model 435 may be, for example, a support vector machine, but may also be a model for which learning has been performed by another algorithm such as logistic regression, decision tree, or neural network. The model 435 may be a linear model.

### 1.2.4. INPUT UNIT 404

The input unit 404 receives an operation input from an operator.

When the measurement data is displayed, the input unit 404 may receive an operation to add a label representing a quality of a state of the equipment 2 to the measurement data. The input unit 404 may supply a signal to the effect that the operation has been performed to the label addition unit 405.

The input unit 404 may receive an operation to designate a target time point of a state index value to be output by the model 435. The target time point may be a current time point or may be a past time point. The input unit 404 may supply a signal to the effect that the operation has been performed to the designation unit 408.

### 1.2.5. LABEL ADDITION UNIT 405

The label addition unit 405 adds to each measurement data a label representing a quality of a state of the equipment 2, in response to an operator's operation. The label addition unit 405 may add a label representing a good state or a poor state, to corresponding measurement data in the measurement data file 430. The label added by the label addition unit 405 may be used in learning processing by the learning processing unit 407.

### 1.2.6. GROUP INFORMATION ACQUISITION UNIT 406

The group information acquisition unit 406 acquires group information. The group information acquisition unit 406 may store the acquired group information in the group information file 431 of the storage unit 403.

The group information acquisition unit 406 may generate group information. In the present embodiment, as an example, the group information acquisition unit 406 may include a calculation unit 461, a grouping unit 462, and a generating unit 463.

### 1.2.6-1. CALCULATION UNIT461

The calculation unit 461 calculates a correlation coefficient for each combination of measurement data in the plurality of types of measurement data acquired by the measurement data acquisition unit 401. The calculation unit 461 may calculate the correlation coefficient by using measurement data in at least a part of a period (also referred to as a calculation target period of the correlation coefficient) among the measurement data in an entire period stored in the measurement data file 430. The correlation coefficient is an index representing a correlation between two data, and may be a value within a range of -1 to +1. The calculation target period of the correlation coefficient may be arbitrarily designated by the operator, and as an example, may be any one period obtained by equally dividing an entire measurement period of measurement data in the measurement data file 430. The calculation unit 461 may supply the correlation coefficient relating to each combination to the grouping unit 462.

### 1.2.6-2. GROUPING UNIT462

The grouping unit 462 groups measurement data of a combination having a higher correlation coefficient than a reference correlation coefficient. The grouping unit 462 may set one measurement data and each measurement data whose correlation coefficient with the one measurement data is higher than the reference correlation coefficient, as the same measurement data group. The grouping unit 462 may set each of measurement data with which no other measurement data has a higher correlation coefficient than the reference correlation coefficient, i.e., each of measurement data whose correlation coefficient with each of other measurement data is lower than the reference correlation coefficient, as a separate measurement data group. The reference correlation coefficient may be a fixed value set in advance (as an example, a value of 0.9 or larger or a value of 0.95 or larger), or may be a value that is arbitrarily changed by the operator.

The grouping unit 462 may supply a grouping result to the generating unit 463. As an example, the grouping unit 462 may supply the measurement data ID of the grouped measurement data to the generating unit 463 for each measurement data group.

### 1.2.6-3. GENERATING UNIT463

The generating unit 463 generates group information representing a measurement data group grouped by the grouping unit 462. The generating unit 463 may generate group information by associating the measurement data IDs of each measurement data included in the measurement data group each other. The generating unit 463 may add identification information (also referred to as a group ID) of the measurement data group to the group information. The generating unit 463 may set a group ID of a group of measurement data whose correlation with each of other measurement data is lower than the reference, as the measurement data ID of the measurement data. The generating unit 463 may store the generated group information in the group information file 431.

### 1.2.7. LEARNING PROCESSING UNIT 407

The learning processing unit 407 performs learning processing of the model 435 for each combination pattern of measurement data selected one type by one type from each measurement data group. The learning processing unit 407 may perform learning processing of the model 435 (in the present embodiment, as an example, the model 435 corresponding to a pattern ID of a combination pattern) that outputs, in response to each measurement data of a combination pattern being input, a state index value by using learning data including each measurement data included in the combination pattern and the state index value. The learning processing unit 407 may perform learning processing of each model 435 so that a difference in state index value due to a difference in combination pattern of the measurement data falls within an arbitrary range (standard error range, as an example).

A value of the state index value included in the learning data may be a binary value corresponding to a label added to the measurement data by the label addition unit 405. In the present embodiment, as an example, the value of the state index value included in the learning data may be "1" when a label representing a good state is added to the measurement data, and may be "-1" when a label representing a poor state is added to the measurement data.

### 1.2.8. DESIGNATION UNIT 408

The designation unit 408 designates a target time point of the state index value to be output by the model 435. The designation unit 408 may designate a target time point in response to an operator's operation. The designation unit 408 may supply to the specifying unit 409 information representing the designated target time point.

### 1.2.9. SPECIFYING UNIT 409

The specifying unit 409 specifies abnormal measurement data (also referred to as abnormality measurement data) among the measurement data acquired by the measurement data acquisition unit 401 for each measurement data group represented by the group information. The abnormality measurement data may be measurement data that is relatively abnormal with respect to another measurement data in the measurement data group. The specifying unit 409 may specify abnormality measurement data at the target time point.

In the present embodiment, as an example, the specifying unit 409 may specify measurement data having the largest difference between a mean rate of change in a reference period including a target time point and a rate of change at the target time point among a plurality of measurement data in a first measurement data group, as abnormality measurement data in the first measurement data group. Thereby, measurement data exhibiting the most abnormal behavior at the target time point is specified as abnormality measurement data.

The rate of change of measurement data at the target time point may be a rate of change between measurement data at the target time point and measurement data at a measurement time point immediately preceding to the target time point. In addition, the mean rate of change of measurement data in the reference period including the target time point may be an average value of respective rates of change between measurement data measured at timings before and after among measurement data measured within the reference period. The specifying unit 409 may calculate the rate of change after smoothing various types of measurement data in a time axis direction by means of a moving average or the like.

The reference period may be a period of any length including a plurality of measurement timings of measurement data. The reference period may be a period shorter than the calculation target period of the correlation coefficient. The reference period may include the target time point at a starting point, at an ending point, or between the starting point and the ending point.

The specifying unit 409 may set a measurement data group including two or more types of measurement data as a first measurement data group. The specifying unit 409 may specify, for a measurement data group including only one type of measurement data, the measurement data as abnormality measurement data.

The specifying unit 409 may supply to the supplying unit 410 the measurement data ID of the abnormality measurement data for each measurement data group and information representing the target time point.

### 1.2.10. SUPPLYING UNIT410

The supplying unit 410 supplies each of the abnormality measurement data specified for each measurement data group by the specifying unit 409 to the model 435. The supplying unit 410 may supply the abnormality measurement data at the target time point to the model 435.

Here, in the present embodiment, as an example, the apparatus 4 is provided with a plurality of models 435. For this reason, the supplying unit 410 may supply, to the model 435 corresponding to a combination pattern of abnormality measurement data specified for each measurement data group by the specifying unit 409 among the plurality of models 435, the abnormality measurement data, respectively. In the present embodiment, as an example, the supplying unit 410 may supply the abnormality measurement data to the model 435 corresponding to a pattern ID of a combination pattern of the abnormality measurement data, respectively.

The supplying unit 410 may further supply the measurement data to the output unit 411. The supplying unit 410 may supply measurement data in a period including the target time point (the reference period described above, as an example) to the output unit 411. The measurement data that is supplied to the output unit 411 may be the abnormality measurement data or may be measurement data different from the abnormality measurement data.

### 1.2.11. OUTPUT UNIT411

The output unit 411 outputs a signal corresponding to the state index value output from the model 435. The output unit 411 may be a display control unit, or may output a display control signal to the display unit 412. As an example, the output unit 411 may cause the state index value, as it is, to be displayed on the display unit 412. In addition to or instead of this, the output unit 411 may cause, in response to a state index value, which represents that the equipment 2 is in a good state, being output from the model 435, the effect that the equipment 2 is in a good state to be displayed on the display unit 412. The output unit 411 may cause, in response to a state index value, which represents that the equipment 2 is in a poor state, being output from the model 435, the effect that the equipment 2 is in a poor state to be displayed on the display unit 412.

When measurement data is supplied from the supplying unit 410, the output unit 411 may cause the measurement data to be displayed on the display unit 412, together with the state index value. As an example, the output unit 411 may cause the state index value and the measurement data to be displayed on the same screen or on separate screens of the display unit 412.

### 1.2.12. DISPLAY UNIT 412

The display unit 412 performs display under control from the output unit 411. Note that, in the present embodiment, as an example, the display unit 412 is provided in the apparatus 4, but may also be externally connected to the apparatus 4.

According to apparatus 4 in the system 1 described above, any one abnormal measurement data is input to the model 435 for each measurement data group having a high correlation, and a signal corresponding to the state index value that is output from the model 435 in response to the input is output. Therefore, as compared to a case in which all the measurement data is input to the model 435 without selecting measurement data for each measurement data group and the state index value is output, a load of computation by the model 435 and a load of learning processing of the model 435 can be reduced. In addition, unlike a case in which measurement data, which is different from the abnormality measurement data, among the measurement data in the measurement data group is input to the model 435, the abnormality of the equipment 2 can be reliably detected. Further, since the abnormality measurement data is specified in the acquired measurement data, even when some measurement data cannot be acquired due to a failure of the sensor 20, or the like, a situation that the measurement data to be input to the model 435 cannot be acquired can be avoided, and the state of the equipment 2 can be reliably detected.

Further, since the abnormality measurement data at the designated target time point is specified and supplied to the model 435, the state of the equipment 2 at the target time point can be detected.

Further, measurement data having the largest difference between the mean rate of change in the reference period including the target time point and the rate of change at the target time point among the plurality of measurement data in the first measurement data group is specified as abnormality measurement data in the first measurement data group. Therefore, the abnormality measurement data that may cause the equipment 2 to be in a poor state can be specified with high accuracy within the first measurement data group.

Further, since the abnormality measurement data is each supplied to the model 435 corresponding to the combination pattern of the abnormality measurement data, the state of the equipment 2 can be detected with high accuracy, unlike a case where the abnormality measurement data is supplied to the model 435 that does not correspond to the combination pattern.

Further, the learning processing of the model 435 is performed for each combination pattern of measurement data selected one type by one type from each measurement data group. Therefore, the state of the equipment 2 can be detected regardless of the combination pattern of abnormality measurement data.

Further, a correlation coefficient is calculated for each combination of measurement data in a plurality of types of measurement data, and measurement data of a combination having a higher correlation coefficient than the reference correlation coefficient are grouped together and group information is generated. Therefore, it is possible to generate group information in which measurement data having a high correlation are grouped together.

Further, the group information represents each of measurement data having a lower correlation with each of other measurement data than a reference among a plurality of types of measurement data, as a separate measurement data group. Therefore, the measurement data constituting the measurement data group of a single element is included in the input data of the model 435, and therefore, the state of the equipment 2 can be detected with high precision.

### 2. GROUP INFORMATION FILE

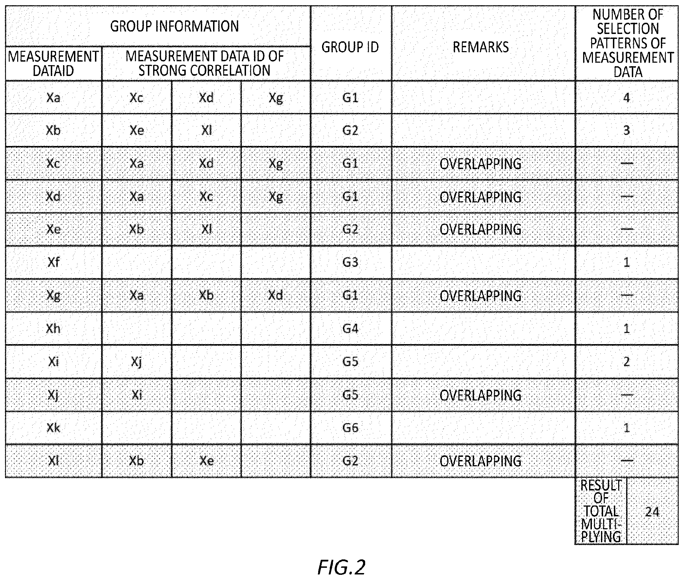

Fig. 2 shows a data structure of the group information file 431. Note that, in this drawing, as an example, 12 types of measurement data are used.

The group information file 431 may associate the measurement data ID of each measurement data with the measurement data ID of another measurement data (also referred to as measurement data having a strong correlation) having a higher correlation with the measurement data than the reference, and to store the same as group information. In addition, the group information file 431 may store a group ID in association with group information of each measurement data group. Fig. 2 shows, as an example, that measurement data Xa, Xc, Xd, and Xg (also referred to as measurement data of measurement data ID "Xa", "Xc", "Xd", and "Xg", respectively) are included in a measurement data group G1 (also referred to as a measurement data group of a group ID "G1"). In addition, it is shown that measurement data Xf is alone included in a measurement data group G3.

Note that, in Fig. 2, for each measurement data group, the number of measurement data included in the measurement data group, in other words, the number of measurement data patterns that can be selected from the measurement data group is shown. A value "24" obtained by totally multiplying these numbers of patterns may represent a total number of combination patterns when arbitrary measurement data is selected for each measurement data group, and furthermore, the number of models 435.

### 3. OPERATIONS

### 3.1. OPERATION IN LEARNING STEP

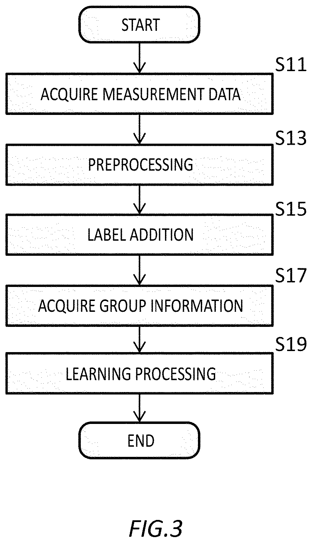

Fig. 3 shows an operation of the apparatus 4 when performing learning processing of the model 435. The apparatus 4 performs learning processing of each model 435 by processing of steps S11 to S19.

In step S11, the measurement data acquisition unit 401 acquires a plurality of types of measurement data representing the state of the equipment 2. In the present embodiment, as an example, the measurement data acquisition unit 401 may collectively acquire measurement data measured in advance by each sensor 20 from an external storage apparatus (not shown).

In step S13, the preprocessing unit 402 performs preprocessing on the acquired measurement data. The preprocessing unit 402 may perform at least one of outlier processing, normalization processing, or missing value processing, which are conventionally known, on the measurement data, or in addition to or instead of this, may perform another preprocessing. The preprocessing unit 402 may store the measurement data after preprocessing in the measurement data file 430.

In step S15, in response to an operator's operation, the label addition unit 405 adds, to each measurement data in the measurement data file 430, a label, which represents whether the equipment 2 was in a good state or in a poor state at the measurement time point of the measurement data. The label addition unit 405 may collectively impart a label, which represents that the equipment 2 was in a good state, to the measurement data measured in a period in which the equipment was in a good state, or may collectively impart a label, which represents that the equipment 2 was in a poor state, to the measurement data measured in a period in which the equipment was in a poor state.

In step S17, the group information acquisition unit 406 acquires group information of a plurality of types of measurement data stored in the measurement data file 430. The group information acquisition unit 406 may generate group information by calculating a correlation coefficient for each combination of measurement data in a plurality of types of measurement data, and grouping measurement data of a combination having a higher correlation coefficient than the reference correlation coefficient.

In addition, the group information acquisition unit 406 may generate pattern data by associating a pattern ID with each combination pattern in the case of selecting measurement data one type by one type from each measurement data group represented by the group information. As an example, when the group information shown in Fig. 2 described above is acquired, a pattern ID may be associated with each of a total of 24 combination patterns in which one type of measurement data is selected from each of the measurement data groups G1 to G6. The generated pattern data may be stored in the storage unit 403.

In step S19, the learning processing unit 407 performs, for each combination pattern of measurement data selected one type by one type from each measurement data group, learning processing of the model 435 that outputs, in response to each measurement data of the combination pattern being input, the state index value by using learning data including each measurement data included in the combination pattern and the state index value. The learning processing unit 407 may perform learning processing of the separate model 435 for each combination pattern represented by the pattern data generated in step S17, by using learning data including each measurement data represented by the pattern data. As an example, when the group information shown in Fig. 2 described above is acquired in step S17, the learning processing unit may perform learning processing of the 24 models 435 by using measurement data of a total of 24 combination patterns.

Thereby, the model 435 corresponding to each combination pattern is generated. The learning processing unit 407 may add, to each model 435, a pattern ID of a combination pattern corresponding to the model 435.

### 3.2. OPERATION IN OPERATING STEP

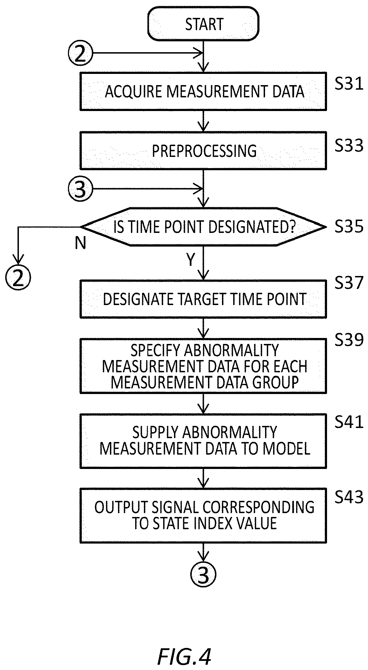

Fig. 4 shows an operation of the apparatus 4 when using the model 435. The apparatus 4 supports monitoring of the equipment 2 by processing of steps S31 to S43. Note that this operation may be started, in response to the equipment 2 being started up. In addition, at the start of the operation, the group information acquired in step S17 described above and each model 435 generated in step S19 described above may be stored in advance in the storage unit 403.

In step S31, the measurement data acquisition unit 401 acquires a plurality of types of measurement data representing the state of the equipment 2. In the present embodiment, as an example, the measurement data acquisition unit 401 may sequentially acquire measurement data from each sensor 20.

In step S33, the preprocessing unit 402 performs preprocessing on the acquired measurement data. The preprocessing unit 402 may perform preprocessing, similarly to step S13 described above.

In step S35, the apparatus 4 determines whether an operation of designating a target time point is performed. If it is determined that the designation operation has been performed (step S35; Yes), the processing may proceed to step S37. If it is determined that the designation operation has not been performed (step S35: No), the processing may proceed to step S31.

In step S37, the designation unit 408 designates a target time point. The designation unit 408 may designate a target time point in response to an operator's operation. The designation unit 408 may designate a current time point or may designate a past point time.

In step S39, the specifying unit 409 specifies abnormality measurement data in the measurement data acquired in the processing of step S31 for each measurement data group represented by the group information. For example, when the group information of Fig. 2 described above is acquired by the group information acquisition unit 406, the specifying unit 409 may specify any one measurement data from each of the measurement data groups having group IDs of "G1" to "G6", as the abnormality measurement data. The specifying unit 409 may specify the abnormality measurement data at the target time point.

In step S41, the supplying unit 410 supplies the abnormality measurement data specified for each measurement data group to each model 435. The supplying unit 410 may detect a model 435 to which a pattern ID of a combination pattern of the specified abnormality measurement data is added, among the plurality of models 435, and may supply each abnormality measurement data at the target time point to the model 435. In the present embodiment, as an example, the supplying unit 410 may specify a pattern ID corresponding to a combination of the abnormality measurement data by referring to the pattern information stored in the storage unit 403 in step S17 described above, and supply each of the abnormality measurement data to the model 435 corresponding to the pattern ID.

In addition to this, the supplying unit 410 may supply, to a model 435 corresponding to another combination pattern, each of the measurement data included in the other combination pattern. Another combination pattern may be a preset default combination pattern. The supplying unit 410 may supply each measurement data at the target time point to the model 435 corresponding to another combination pattern.

In step S43, the output unit 411 outputs a signal corresponding to the state index value output from the model 435. As an example, the output unit 411 may cause the state index value to be displayed on the display unit 412 and also cause whether the equipment 2 is in a good state or in a poor state to be displayed on the display unit 412.

Note that, when each of the measurement data is also supplied to the model 435 corresponding to another combination pattern in step S41, the output unit 411 may output a signal also corresponding to the state index value output from the model 435. For example, the output unit 411 may output a signal corresponding to a state index value representing a poorer state of the state index value output from the model 435 corresponding to the combination pattern of abnormality measurement data and the state index value output from the model 435 corresponding to another combination pattern. The output unit 411 may output signals corresponding to the two state index values, respectively, in response to an operator's selection operation.

According to the operation described above, the signals corresponding to the state index value output from the model 435 corresponding to the abnormality measurement data for each measurement data group and the state index value output from the model 435 corresponding to another combination pattern are output. Therefore, even when the specifying accuracy of the abnormality measurement data is bad, the abnormality of the equipment 2 can be detected with high accuracy.

Note that, in the operations of the operating step described above, the group information has been described as being stored in advance in the storage unit 403 from before the processing of step S31. However, the group information may be acquired at any one timing by the group information acquisition unit 406 after the processing of step S31 and before the processing of step S39. In this case, the group information may be generated by the group information acquisition unit 406, based on the past measurement data acquired by the processing of step S31.

### 4. VARIATIONS OF SYSTEM 1

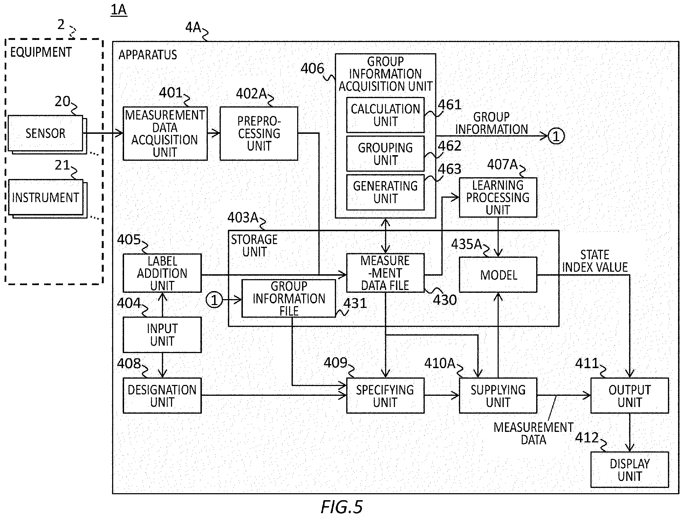

Fig. 5 shows a system 1A according to a variation. The system 1A includes an apparatus 4A, and the apparatus 4A includes a preprocessing unit 402A, a storage unit 403A, a learning processing unit 407A, and a supplying unit 410A.

### 4.1. PREPROCESSING UNIT 402A

The preprocessing unit 402A is an example of the normalization unit and normalizes each measurement data included in at least one measurement data group. Normalization may also include standardization in which a mean of each type of measurement data is made 0 and a variance is made 1.

Here, when the group information is not acquired by the group information acquisition unit 406, the preprocessing unit 402A may correct (also referred to as scaling) each of measurement data to a value within a range commonly set for all types of measurement data. In other words, the preprocessing unit 402A may normalize each of measurement data within a range common to all measurement data groups.

When the group information is acquired by the group information acquisition unit 406, the preprocessing unit 402A may normalize each of measurement data included in each measurement data group including two or more types of measurement data. As an example, the preprocessing unit 402A may correct each of measurement data included in each measurement data group including two or more types of measurement data to a value within a range set for the measurement data group. The preprocessing unit 402A may perform or not to perform, for measurement data in a measurement data group including only one type of measurement data, normalization in the measurement data group. Note that, instead of this, also when the group information is acquired by the group information acquisition unit 406, the preprocessing unit 402A may perform normalization, similarly to the case in which the group information is not acquired by the group information acquisition unit 406.

The preprocessing unit 402A may read out measurement data stored in the measurement data file 430 of the storage unit 403, to perform normalization on the measurement data, and to store the normalized measurement data in the measurement data file 430, as the measurement data after normalization. In the present variation, the measurement data after normalization may be read at least by the learning processing unit 407A and the supplying unit 410A. The preprocessing unit 402A may further perform at least one of outlier processing or missing value processing similar to the above-described preprocessing unit 402 on the measurement data, or in addition to or instead of this, to perform another preprocessing.

### 4.2. STORAGE UNIT 403A

The storage unit 403A stores a single model 435A. The model 435A outputs a state index value, in response to an input of each measurement data of any combination pattern in which any one type of measurement data is selected for each measurement data group. Similarly to the model 435 described above, the model 435A may output a state index value that is not binarized into a value representing that the equipment 2 is in a good state and a value representing that the equipment is in a poor state. The model 435A may be, for example, a support vector machine, but may also be a model for which learning has been performed by another algorithm such as logistic regression, decision tree, or neural network. The model 435 may be a linear model.

### 4.3: LEARNING PROCESSING UNIT 407A

The learning processing unit 407A performs learning processing of the model 435A. The learning processing unit 407A may perform learning processing of the model 435A by using learning data including the measurement data of each measurement data group normalized by the preprocessing unit 402A and the state index value. Note that the measurement data of a measurement data group including only one type of measurement data may not be normalized. The learning processing unit 407A may perform learning processing of the model 435A so that a difference in state index value due to a difference in combination pattern of the measurement data falls within an arbitrary range (standard error range, as an example).

The learning data may include at least one type of measurement data for each measurement data group. As an example, when the group information shown in Fig. 2 described above is acquired by the group information acquisition unit 406, the learning data may include only any one type of measurement data or a plurality of types of measurement data among the measurement data Xa, Xc, Xd, and Xg for the measurement data group G1. Note that the model 435A for which learning processing has been performed using the measurement data of the equipment 2 by the learning processing unit 407A may be used to determine a state of another equipment 2.

### 4.4. SUPPLYING UNIT 410A

The supplying unit 410A supplies each of the abnormality measurement data specified for each measurement data group by the specifying unit 409 to the model 435A. The supplying unit 410A may supply the abnormality measurement data normalized by the preprocessing unit 402A and specified by the specifying unit 409 to the model 435A. Note that the measurement data of a measurement data group including only one type of measurement data may not be normalized. The supplying unit 410A may supply abnormality measurement data at the target time point to the model 435A.

In addition to this, the supplying unit 410A may separately supply measurement data of another combination pattern (default combination pattern, as an example) different from the combination pattern of the abnormality measurement data to the model 435A, respectively. The supplying unit 410A may supply each measurement data at the target time point to the model 435A.

Note that, when each measurement data of another combination pattern different from the combination pattern of the abnormality measurement data is separately supplied to the model 435A, the output unit 411 may output a signal corresponding to also a state index value output from the model 435A by each measurement data of the other combination pattern. For example, the output unit 411 may output a signal corresponding to a state index value representing a poorer state of the state index value output from the model 435A by the abnormality measurement data for each measurement data group and the state index value output from the model 435A by each measurement data of another combination pattern. The output unit 411 may output a signal corresponding to each state index value, respectively, in response to an operator's selection operation. In these cases, it is possible to detect that the equipment 2 is in a poor state with high accuracy, regardless of the specifying accuracy of the abnormality measurement data.

According to the apparatus 4A in the system 1A described above, similarly to the apparatus 4 described above, any one abnormal measurement data is input to the model 435A for each measurement data group having a high correlation, and a signal corresponding to the state index value that is output from the model 435A in response to the input is output. Therefore, as compared to a case in which all the measurement data is input to the model 435A without selecting measurement data for each measurement data group and the state index value is output, a load of computation by the model 435A and a load of learning processing of the model 435A can be reduced. In addition, unlike a case in which measurement data, which is different from the abnormality measurement data, among the measurement data in the measurement data group is input to the model 435A, the abnormality of the equipment 2 can be reliably detected. Further, since the abnormality measurement data is specified in the acquired measurement data, even when some measurement data cannot be acquired due to a failure of the sensor 20, or the like, a situation that the measurement data to be input to the model 435A cannot be acquired can be avoided, and the state of the equipment 2 can be reliably detected.

In addition, the specified abnormality measurement data is each supplied to the model 435A that outputs a state index value in response to an input of each measurement data of any combination pattern in which any one type of measurement data is selected for each measurement data group. Therefore, the state of the equipment 2 can be reliably detected, regardless of the type of the abnormality measurement data.

In addition, since each measurement data included in at least one measurement data group is normalized and the abnormality measurement data specified for each measurement data group is supplied to the model 435A, even when any measurement data in the measurement data group becomes abnormality measurement data, the state of the equipment 2 can be detected with high accuracy.

Further, since the learning processing of the model 435A is performed using the learning data including each measurement data of at least one normalized measurement data group and the state index value, even when any measurement data in the measurement data group becomes abnormality measurement data, it is possible to generate the model 435A that outputs a state index value with high precision.

### 5. VARIATIONS OF SPECIFYING METHOD OF ABNORMALITY MEASUREMENT DATA

Note that, in the above embodiment and variation, the specifying unit 409 has been described as specifying measurement data having the largest difference between the mean rate of change in the reference period including the target time point and the rate of change at the target time point among the plurality of measurement data in the first measurement data group, as the abnormality measurement data in the first measurement data group. In addition to or instead of this, the specifying unit 409 may specify abnormal measurement data by using one or more other methods.

### 5.1. VARIATION (1)

For example, the specifying unit 409 may specify, among a plurality of measurement data in a second measurement data group at the target time point, measurement data for causing the state index value representing the poorest state to be output from the model 435, 435A when separately supplied to the model 435, 435A by the supplying unit 410, as abnormality measurement data in the second measurement data group.

As an example, when the group information shown in Fig. 2 described above is acquired by the group information acquisition unit 406, the specifying unit 409 may compare a state index value that is output when each measurement data is input to the model 435, 435A with one or more combination patterns including measurement data Xi, and a state index value that is output when each measurement data is input to the model 435, 435A with one or more combination patterns including measurement data Xj each other, for the measurement data group G5. Among the measurement data of each measurement data group input to the model 435, 435A, measurement data other than the measurement data group G5 may be the same in the combination pattern including the measurement data Xi and the combination pattern including the measurement data Xj. The specifying unit 409 may smooth various types of measurement data at the target time point in a time axis direction by means of a moving average or the like, and then to input the smoothed data to the model 435, 435A. The specifying unit 409 may specify measurement data by which a state index value representing a poorer state has been output from the models 435, 435A among the measurement data Xi and Xj, as abnormality measurement data.

The specifying unit 409 may set a measurement data group including two or more types of measurement data, as a second measurement data group. The specifying unit 409 may specify, for a measurement data group including only one type of measurement data, the measurement data as abnormality measurement data. According to the method of the variation (1), the abnormality measurement data that can cause the equipment 2 to be in a poor state can be specified with high precision within the second measurement data group.

### 5.2. VARIATION (2)

In addition, the specifying unit 409 may, when correlation coefficients between one measurement data of a plurality of measurement data in a third measurement data group and other respective measurement data are each less than a threshold in a reference period including target time point, respectively, specify the one measurement data as abnormality measurement data in the third measurement data group. The specifying unit 409 may calculate the correlation coefficient after smoothing the various measurement data in the reference period in a time axis direction by means of a moving average or the like. The specifying unit 409 may set a measurement data group including three or more types of measurement data, as the third measurement data group. As an example, when the group information shown in Fig. 2 described above is acquired by the group information acquisition unit 406, in response to a correlation coefficient between the measurement data Xb and the measurement data Xe and a correlation coefficient between the measurement data Xb and the measurement data XI in the measurement data group G2 being each less than a threshold, the measurement data Xb may become the abnormality measurement data of the measurement data group G2.

The specifying unit 409 may, when a correlation coefficient between one measurement data and any other measurement data among a plurality of measurement data in the third measurement data group is equal to or larger than a threshold, specify measurement data having the lowest correlation coefficient with the one measurement data among the plurality of measurement data in the third measurement data group, as abnormality measurement data in the third measurement data group. As an example, when the correlation coefficient between the measurement data Xb and the measurement data Xe in the measurement data group G2 is greater than a threshold and the correlation coefficient between the measurement data Xb and the measurement data Xl is less than a threshold, the measurement data XI may become abnormality measurement data of the measurement data group G2. Thereby, since it is possible to omit the trouble of sequentially setting each measurement data in the third measurement data group as one measurement data and calculating a correlation coefficient with another measurement data, the abnormality measurement data that can cause the equipment 2 to be in a poor state can be easily specified within the third measurement data group. According to the method of the variation (2), the abnormal measurement data that can cause the equipment 2 to be in a poor state can be specified with high accuracy within the third measurement data group.

Note that the threshold of the correlation coefficient may be arbitrarily set, and may be the same or different value as or from the reference correlation coefficient. The threshold of the correlation coefficient may be set for each combination of measurement data. For example, when an average value of a correlation coefficient calculated from the measurement data Xa and the measurement data Xb stored in the measurement data file 430 is denoted as R and a variance is denoted as σ, the threshold of the correlation coefficient between the measurement data Xa and Xb may be R-σ. A period for which the average value R and the variance σ are calculated may be the calculation target period of the correlation coefficient, or may be a part of the calculation target period.

### 5.3. VARIATION (3)

In addition, the specifying unit 409 may specify measurement data having the largest autocovariance or the lowest autocorrelation at the target time point among a plurality of measurement data in a fourth measurement data group, as abnormality measurement data in the fourth measurement data group. The specifying unit 409 may specify measurement data having the largest autocovariance and the lowest autocorrelation at the target time point, as the abnormality measurement data. The specifying unit 409 may set a measurement data group including one or more types of measurement data, as the fourth measurement data group. According to the method of the variation (3), the abnormality measurement data that can cause the equipment 2 to be in a poor state can be specified with high precision within the fourth measurement data group.

### 5.4. VARIATION (4)

In addition, the specifying unit 409 may specify measurement data having the largest difference between the reference time point and the target time point among respective measurement data in a fifth measurement data group, as abnormality measurement data in the fifth measurement data group. Here, the specifying unit 409 may set, among respective acquisition time points relating to data sets of two or more types of measurement data not included in the fifth measurement data group, an acquisition time point of a data set having the highest approximation degree to a data set at the target time point, as the reference time point. The specifying unit 409 may set a measurement data group including one or more types of measurement data, as the fifth measurement data group. According to the method of the variation (4), the abnormality measurement data that can cause the equipment 2 to be in a poor state can be specified with high precision within the fifth measurement data group.

Note that various types of measurement data included in a data set may be included in the same measurement data group or may be included in different measurement data groups. The high approximation degree between data sets may mean that a distance between data sets is short.

### 6. OTHER VARIATIONS

Note that, in the above embodiment and variations, the specifying unit 409 has been described as specifying one type of abnormality measurement data within the measurement data group, but may specify two or more types of abnormality measurement data. For example, in the specifying methods described in the embodiment and variations, when there are n or more types of corresponding measurement data (n: natural number of 2 or larger), the specifying unit 409 may specify each of the measurement data as abnormality measurement data of the same measurement data group. As an example, in the specifying method of the embodiment, the specifying unit 409 may, when there are two types of measurement data having the largest difference between the mean rate of change in the reference period including the target time point and the rate of change at the target time point among the plurality of measurement data in the first measurement data group, specify each of the measurement data as abnormality measurement data of the first measurement data group.

When there is a plurality of abnormality measurement data (also referred to as abnormality measurement data X₁, ... Xₙ) in the same measurement data group, the supplying unit 410 of the apparatus 4 may supply, to each model 435 corresponding to each of combination patterns of any one abnormality measurement data X_{N} (N: each natural number of 1 ≤ N ≤ n) of the abnormality measurement data X₁, ... Xₙ and abnormality measurement data of each of other measurement data groups, the abnormality measurement data of the combination pattern. In addition, the supplying unit 410A of the apparatus 4A may supply, for each combination pattern of any one abnormality measurement data X_{N} of the abnormality measurement data X₁, ... Xₙ in the same measurement data group and abnormality measurement data of each of other measurement data groups, the abnormality measurement data of the combination pattern to the model 435A, respectively. In these cases, the output unit 411 may output a signal corresponding to a state index value representing the poorest state among the respective state index values output from the model 435, 435A, or may output a signal corresponding to each state index value, respectively, in response to an operator's selection operation.

Further, the group information acquisition unit 406 has been described as generating the group information, but may also acquire group information generated in another apparatus.

Further, the group information acquisition unit 406, the learning processing unit 407, the specifying unit 409, and the supplying units 410, 410A have been described as reading out the measurement data after preprocessing by the preprocessing unit 402, 402A from the storage unit 403, 403A, but may also read out measurement data for which preprocessing has not been performed. Further, the preprocessing unit 402, 402A may also read out measurement data for which preprocessing has not been performed from the storage unit 403, 403A, to perform preprocessing on the read measurement data and to supply the same to any one of the group information acquisition unit 406, the learning processing unit 407, the specifying unit 409, or the supplying unit 410, 410A.

Further, the apparatuses 4 and 4A have been described as separate apparatuses, but may also be the same apparatus. For example, the apparatus 4 may function as the apparatus 4A when the number of combination patterns of measurement data selected one type by one type from each measurement data group exceeds a reference number. As an example, the preprocessing unit 402 of the apparatus 4 may function as the preprocessing unit 402A, the learning processing unit 407 of the apparatus 4 may function as the learning processing unit 407A, and the supplying unit 410 of the apparatus 4 may function as the supplying unit 410A. Thereby, when the number of combination patterns of measurement data is small, learning of a separate model 435 is performed for each combination pattern, and when the number of combination patterns of measurement data is large, learning of a common model 435A is performed, so that the load of learning can be reduced. The reference number may be determined according to the specification (parallel processing performance, as an example) of the apparatus 4, or may be arbitrarily determined by an operator.

Further, the apparatus 4, 4A has been described as including the preprocessing unit 402, 402A, the storage unit 403, 403A, the input unit 404, the label addition unit 405, the learning processing unit 407, 407A, the designation unit 408, the specifying unit 409, the supplying unit 410, 410A, the output unit 411 and the display unit 412 but may not include any one of them. For example, when the apparatus 4, 4A does not include the storage unit 403, 403A, the apparatus may be connected to an external storage apparatus. When the apparatus 4, 4A does not include the label addition unit 405, the apparatus may acquire measurement data to which a label has been added in advance by the measurement data acquisition unit 401. When the apparatus 4, 4A does not include the learning processing unit 407, 407A, the apparatus may store the model 435 for which learning processing has been performed in advance in the storage unit 403, 403A. When the apparatus 4, 4A does not include the designation unit 408, the apparatus may set a default time point (current time point, as an example) as the target time point. When the apparatus 4, 4A does not include the specifying unit 409, the supplying unit 410, 410A, or the output unit 411, the apparatus may perform learning processing of the model 435.

Further, the output unit 411 has been described as outputting the display control signal corresponding to the state index value, but may also output another type of a signal, such as an audio signal or alert signal corresponding to the state index value.

In addition, various embodiments of the present invention may be described with reference to flowcharts and block diagrams whose blocks may represent (1) steps of processes in which operations are executed or (2) sections of apparatuses responsible for executing operations. Certain steps and sections may be implemented by dedicated circuitry, programmable circuitry supplied with computer-readable instructions stored on computer-readable media, and/or processors supplied with computer-readable instructions stored on computer-readable media. Dedicated circuitry may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element such as a flip-flop, a register, a field programmable gate array (FPGA) and a programmable logic array (PLA), and the like.

A computer-readable medium may include any tangible apparatus that can store instructions to be executed by a suitable apparatus, and as a result, the computer-readable medium having instructions stored thereon includes an article of manufacture including instructions which can be executed to create means for performing operations specified in the flowcharts or block diagrams. Examples of the computer-readable medium may include an electronic storage medium, a magnetic storage medium, an optical storage medium, an electromagnetic storage medium, a semiconductor storage medium, and the like. More specific examples of the computer-readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, and the like.

The computer-readable instruction may include: an assembler instruction, an instruction-set-architecture (ISA) instruction; a machine instruction; a machine dependent instruction; a microcode; a firmware instruction; state-setting data; or either a source code or an object code written in any combination of one or more programming languages, including an object oriented programming language such as Smalltalk (registered trademark), JAVA (registered trademark), C++, or the like; and a conventional procedural programming language such as a "C" programming language or a similar programming language.

Computer-readable instructions may be provided to a processor of a general-purpose computer, special purpose computer, or other programmable data processing apparatuses, or to a programmable circuit, locally or via a local area network (LAN), wide area network (WAN) such as the Internet, or the like, to execute the computer-readable instructions to create means for performing operations specified in the flowcharts or block diagrams. An example of the processor includes a computer processor, processing unit, microprocessor, digital signal processor, controller, microcontroller, etc.

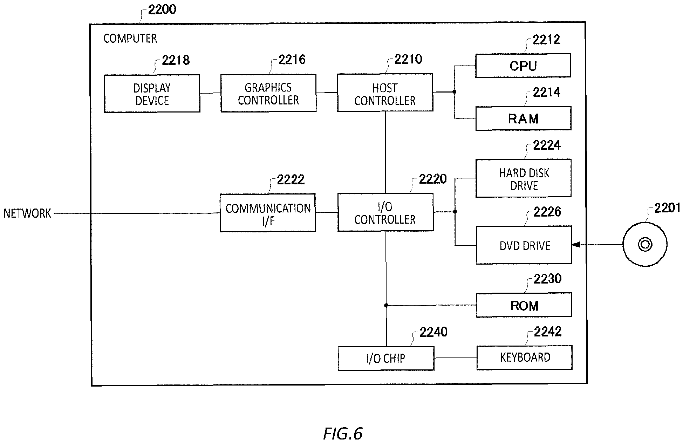

Fig. 6 shows an example of a computer 2200 in which a plurality of aspects of the present invention may be wholly or partly embodied. A program installed in the computer 2200 may cause the computer 2200 to function as an operation associated with the apparatuses according to the embodiments of the present invention or as one or more sections of the apparatuses, or may cause the operation or the one or more sections to be executed, and/or may cause the computer 2200 to execute a process according to the embodiments of the present invention or a stage of the process. Such programs may be executed by a CPU 2212 to cause the computer 2200 to perform certain operations associated with some or all of the blocks in the flowcharts and block diagrams described in the present specification.

The computer 2200 according to the present embodiment includes the CPU 2212, a RAM 2214, a graphics controller 2216, and a display apparatus 2218, which are mutually connected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as a ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 obtains image data generated by the CPU 2212 on a frame buffer or the like provided in the RAM 2214 or in itself, and causes the image data to be displayed on the display apparatus 2218.

The communication interface 2222 communicates with other electronic apparatuses via a network. The hard disk drive 2224 stores programs and data used by the CPU 2212 in the computer 2200. The DVD-ROM drive 2226 reads the programs or the data from the DVD-ROM 2201, and provides the hard disk drive 2224 with the programs or the data via the RAM 2214. The IC card drive reads the programs and the data from the IC card, and/or writes the programs and the data to the IC card.

The ROM 2230 stores therein boot programs and the like executed by the computer 2200 at the time of activation, and/or programs that depend on the hardware of the computer 2200. The input/output chip 2240 may also connect various input/output units to the input/output controller 2220 via a parallel port, a serial port, a keyboard port, a mouse port, and the like.

The program is provided by a computer-readable medium such as the DVD-ROM 2201 or the IC card. The program is read from a computer-readable medium, installed in the hard disk drive 2224, the RAM 2214, or the ROM 2230 which are also examples of the computer-readable medium, and executed by the CPU 2212. The information processing described in these programs is read by the computer 2200 and provides cooperation between the programs and various types of hardware resources. The apparatus or method may be configured by implementing operations or processing of information according to use of the computer 2200.

For example, when a communication is executed between the computer 2200 and an external apparatus, the CPU 2212 may execute a communication program loaded in the RAM 2214, and instruct the communication interface 2222 to process the communication based on the processing written in the communication program. The communication interface 2222, under control of the CPU 2212, reads transmission data stored on a transmission buffering region provided in a recording medium such as the RAM 2214, the hard disk drive 2224, the DVD-ROM 2201, or the IC card, and transmits the read transmission data to a network or writes reception data received from a network to a reception buffering region or the like provided on the recording medium.

In addition, the CPU 2212 may cause the RAM 2214 to read all or a necessary part of a file or database stored in an external recording medium such as the hard disk drive 2224, the DVD-ROM drive 2226 (DVD-ROM 2201), the IC card, or the like, and may execute various types of processing on data on the RAM 2214. Next, the CPU 2212 writes back the processed data to the external recording medium.

Various types of information such as various types of programs, data, tables, and databases may be stored in a recording medium and subjected to information processing. The CPU 2212 may execute various types of processing on the data read from the RAM 2214 to write back a result to the RAM 2214, the processing being described throughout the present disclosure, specified by instruction sequences of the programs, and including various types of operations, information processing, condition determinations, conditional branching, unconditional branching, information retrievals/replacements, or the like. In addition, the CPU 2212 may search for information in a file, a database, etc., in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The programs or software modules described above may be stored in a computer-readable medium on or near the computer 2200. In addition, a recording medium such as a hard disk or a RAM provided in a server system connected to a dedicated communication network or the Internet can be used as a computer-readable medium, thereby providing a program to the computer 2200 via the network.

### EXPLANATION OF REFERENCES

1: system
2: equipment
4: apparatus
20: sensor
21: instrument
401: measurement data acquisition unit
402: preprocessing unit
403: storage unit
404: input unit
405: label addition unit
406: group information acquisition unit
407: learning processing unit
408: designation unit
409: specifying unit
410: supplying unit
411: output unit
412: display unit
430: measurement data file
431: group information file
435: model
461: calculation unit
462: grouping unit
463: generating unit
2200: computer
2201: DVD-ROM
2210: host controller
2212: CPU
2214: RAM
2216: graphics controller
2218: display device
2220: input/output controller
2222: communication interface
2224: hard disk drive
2226: DVD-ROM drive
2230: ROM
2240: input/output chip
2242: keyboard.

## Claims

1. An apparatus (4) comprising:
a measurement data acquisition unit (401) configured to acquire a plurality of types of measurement data representing a state of a target; **characterized in that** the apparatus further comprises
a group information acquisition unit (406) configured to acquire group information, wherein the group information acquisition unit (406) includes: a calculation unit (461), a grouping unit (462) and a generation unit (463);
the calculation unit (461) configured to calculate a correlation for each combination of measurement data in the plurality of types of measurement data acquired by the measurement data acquisition unit (401);
the grouping unit (462) configured to group measurement data of a combination having a higher correlation than a reference; and
the generating unit (463) configured to generate the group information representing a group of measurement data grouped by the grouping unit (462);
a designation unit (408) configured to designate a target time point;
a specifying unit (409) configured to specify abnormal measurement data among the measurement data acquired by the measurement data acquisition unit (401), for each group represented by the group information, at the target time point;
a supplying unit (410) configured to supply each of the abnormal measurement data specified for each group by the specifying unit (409) at the target time point to a model learning so as to output, in response to any one type of measurement data being input for each group represented by the group information, a state index value representing a quality of a state of the target, wherein the model outputs the state index value in response to each of the abnormal measurement data supplied by the supplying unit; and
an output unit (411) configured to output a signal corresponding to the state index value output from the model in response to each of the abnormal measurement data supplied by the supplying unit;
wherein the specifying unit (409) is configured to specify the abnormal measurement data by at least one of:
specifying measurement data having a largest difference between a mean rate of change in a reference period including the target time point and a rate of change at the target time point among a plurality of measurement data in a first group, as abnormal measurement data in the first group;
specifying, among a plurality of measurement data in a second group at the target time point, measurement data for causing the state index value representing a poorest state to be output from the model when supplied to the model separately by the supplying unit, as abnormal measurement data in the second group;
specifying, when correlation coefficients between one measurement data of a plurality of measurement data in a third group and other respective measurement data are each less than a threshold in a reference period including the target time point, the one measurement data as abnormal measurement data in the third group;
specifying measurement data having largest autocovariance or lowest autocorrelation at the target time point among a plurality of measurement data in a fourth group, as abnormal measurement data in the fourth group; or
specifying measurement data having a largest difference between a reference time point and the target time point among respective measurement data in a fifth group, as abnormal measurement data in the fifth group, and setting, among respective acquisition time points relating to data sets of two or more types of measurement data not included in the fifth group, an acquisition time point of a data set having highest approximation degree to a data set at the target time point, as the reference time point.

2. The apparatus (4) according to Claim 1, wherein
when the specifying unit (409) specifies the abnormal measurement data by specifying the one measurement data as abnormal measurement data in the third group, the specifying unit (409) is configured to set a group including three or more types of measurement data as the third group, and to specify measurement data having a lowest correlation coefficient with the one measurement data among a plurality of measurement data in the third group, as abnormal measurement data in the third group, when a correlation coefficient between the one measurement data and any other measurement data among the plurality of measurement data in the third group is equal to or larger than a threshold.

3. The apparatus (4) according to Claim 1 or 2, wherein
the supplying unit (410) is configured to supply the each of the abnormal measurement data specified for each group by the specifying unit (409) to the model configured to output, in response to each measurement data of an arbitrary combination pattern in which any one type of measurement data is selected for each group being input, the state index value.

4. The apparatus (4) according to Claim 3, further comprising a normalization unit configured to normalize each measurement data included in at least one group, wherein
the supplying unit (410) is configured to supply, to the model, abnormal measurement data normalized by the normalization unit and specified for each group by the specifying unit.

5. The apparatus (4) according to Claim 3, further comprising:
a normalization unit configured to normalize each measurement data included in at least one group; and
a learning processing unit configured to perform learning processing of the model by using learning data including measurement data of each group normalized by the normalization unit and the state index value.

6. The apparatus (4) according to Claim 1 or 2, wherein
the supplying unit (410) is configured to supply the each of the abnormal measurement data specified for each group by the specifying unit (409) to the model corresponding to a combination pattern of the abnormal measurement data among a plurality of models including the model provided for each combination pattern of measurement data selected one type by one type from each group, and configured to output, in response to each measurement data of a corresponding combination pattern being input, the state index value.

7. The apparatus (4) according to Claim 6, further comprising a learning processing unit configured to perform, for each combination pattern of measurement data selected one type by one type from each group, learning processing of the model configured to output, in response to each measurement data of the combination pattern being input, the state index value by using learning data including each measurement data included in the combination pattern and the state index value.

8. A method comprising:
acquiring a plurality of types of measurement data representing a state of a target;
acquiring group information by:
calculating a correlation for each combination of measurement data in the plurality of types of measurement data;
grouping measurement data of a combination having a higher correlation than a reference; and
generating the group information representing a group of measurement data grouped;
designating a target time point;
specifying abnormal measurement data among the measurement data acquired by the acquiring the plurality of types of measurement data, for each group represented by the group information, at the target time point;
supplying each of the abnormal measurement data specified for each group by the specifying the abnormal measurement data at the target time point to a model learning so as to output, in response to any one type of measurement data being input for each group represented by the group information, a state index value representing a quality of a state of the target, wherein the model outputs the state index value in response to each of the abnormal measurement data supplied; and
outputting a signal corresponding to the state index value output from the model in response to each of the abnormal measurement data supplied;
wherein the specifying abnormal measurement data specifies the abnormal measurement data by at least one of:
specifying measurement data having a largest difference between a mean rate of change in a reference period including the target time point and a rate of change at the target time point among a plurality of measurement data in a first group, as abnormal measurement data in the first group;
specifying, among a plurality of measurement data in a second group at the target time point, measurement data for causing the state index value representing a poorest state to be output from the model when supplied to the model separately by the supplying unit, as abnormal measurement data in the second group;
specifying, when correlation coefficients between one measurement data of a plurality of measurement data in a third group and other respective measurement data are each less than a threshold in a reference period including the target time point, the one measurement data as abnormal measurement data in the third group;
specifying measurement data having largest autocovariance or lowest autocorrelation at the target time point among a plurality of measurement data in a fourth group, as abnormal measurement data in the fourth group; or
specifying measurement data having a largest difference between a reference time point and the target time point among respective measurement data in a fifth group, as abnormal measurement data in the fifth group, and setting, among respective acquisition time points relating to data sets of two or more types of measurement data not included in the fifth group, an acquisition time point of a data set having highest approximation degree to a data set at the target time point, as the reference time point.

9. A program configured to cause a computer to function as:
a measurement data acquisition unit (401) configured to acquire a plurality of types of measurement data representing a state of a target;
a group information acquisition unit (406) configured to acquire group information wherein the group information acquisition unit (406) includes:
a calculation unit (461) configured to calculate a correlation for each combination of measurement data in the plurality of types of measurement data acquired by the measurement data acquisition unit (401);
a grouping unit (462) configured to group measurement data of a combination having a higher correlation than a reference; and
a generating unit (463) configured to generate the group information representing a group of measurement data grouped by the grouping unit (462);
a designation unit (408) configured to designate a target time point;
a specifying unit (409) configured to specify abnormal measurement data among the measurement data acquired by the measurement data acquisition unit (401), for each group represented by the group information, at the target time point;
a supplying unit (410) configured to supply each of the abnormal measurement data specified for each group by the specifying unit (409) at the target time point to a model learning so as to output, in response to any one type of measurement data being input for each group represented by the group information, a state index value representing a quality of a state of the target, wherein the model outputs the state index value in response to each of the abnormal measurement data supplied by the supplying unit; and
an output unit (411) configured to output a signal corresponding to the state index value output from the model in response to each of the abnormal measurement data supplied by the supplying unit;
wherein the specifying unit (409) specifies the abnormal measurement data by at least one of:
specifying measurement data having a largest difference between a mean rate of change in a reference period including the target time point and a rate of change at the target time point among a plurality of measurement data in a first group, as abnormal measurement data in the first group;
specifying, among a plurality of measurement data in a second group at the target time point, measurement data for causing the state index value representing a poorest state to be output from the model when supplied to the model separately by the supplying unit, as abnormal measurement data in the second group;
specifying, when correlation coefficients between one measurement data of a plurality of measurement data in a third group and other respective measurement data are each less than a threshold in a reference period including the target time point, the one measurement data as abnormal measurement data in the third group;
specifying measurement data having largest autocovariance or lowest autocorrelation at the target time point among a plurality of measurement data in a fourth group, as abnormal measurement data in the fourth group; or
specifying measurement data having a largest difference between a reference time point and the target time point among respective measurement data in a fifth group, as abnormal measurement data in the fifth group, and setting, among respective acquisition time points relating to data sets of two or more types of measurement data not included in the fifth group, an acquisition time point of a data set having highest approximation degree to a data set at the target time point, as the reference time point.

## Patentansprüche

1. Einrichtung (4), umfassend
eine Messdatenerfassungseinheit (401), die konfiguriert ist, um eine Vielzahl von Typen von Messdaten zu erfassen, die einen Zustand eines Ziels darstellen; **dadurch gekennzeichnet, dass** die Einrichtung weiter umfasst
eine Gruppeninformationserfassungseinheit (406), die konfiguriert ist, um Gruppeninformationen zu erfassen, wobei die Gruppeninformationserfassungseinheit (406) Folgendes einschließt: eine Berechnungseinheit (461), eine Gruppierungseinheit (462) und eine Erzeugungseinheit (463);
wobei die Berechnungseinheit (461) konfiguriert ist, um eine Korrelation für jede Kombination von Messdaten in der Vielzahl von Typen von Messdaten zu berechnen, die von der Messdatenerfassungseinheit (401) erfasst werden;
wobei die Gruppierungseinheit (462) konfiguriert ist, um Messdaten einer Kombination zu gruppieren, die eine höhere Korrelation als eine Referenz aufweisen; und
wobei die Erzeugungseinheit (463) konfiguriert ist, um die Gruppeninformation zu erzeugen, die eine Gruppe von Messdaten darstellt, die durch die Gruppierungseinheit (462) gruppiert wurden;
eine Bestimmungseinheit (408), die konfiguriert ist, um einen Zielzeitpunkt zu bestimmen;
eine Spezifizierungseinheit (409), die konfiguriert ist, um abnormale Messdaten unter den von der Messdatenerfassungseinheit (401) erfassten Messdaten für jede Gruppe, dargestellt durch die Gruppeninformation, zum Zielzeitpunkt zu spezifizieren;
eine Zuführeinheit (410), die konfiguriert ist, um alle abnormalen Messdaten, die für jede Gruppe durch die Spezifizierungseinheit (409) zu dem Zielzeitpunkt spezifiziert wurden, einem lernenden Modell zuzuführen, um als Reaktion auf einen beliebigen Typ von Messdaten, die für jede durch die Gruppeninformation repräsentierte Gruppe eingegeben werden, einen Zustandsindexwert auszugeben, der eine Qualität eines Zustands des Ziels repräsentiert, wobei das Modell den Zustandsindexwert als Reaktion auf jede der abnormalen Messdaten ausgibt, die von der Zuführeinheit zugeführt werden; und
eine Ausgabeeinheit (411), die konfiguriert ist, um ein Signal auszugeben, das dem von dem Modell ausgegebenen Zustandsindexwert entspricht, und zwar in Reaktion auf jede der von der Zuführeinheit zugeführten abnormalen Messdaten;
wobei die Spezifizierungseinheit (409) konfiguriert ist, um die abnormalen Messdaten durch mindestens eines der folgenden Merkmale zu spezifizieren:
Spezifizieren von Messdaten, die eine größte Differenz zwischen einer mittleren Änderungsrate in einer Referenzperiode, die den Zielzeitpunkt einschließt, und einer Änderungsrate zum Zielzeitpunkt unter einer Vielzahl von Messdaten in einer ersten Gruppe aufweisen, als abnormale Messdaten in der ersten Gruppe;
Spezifizieren von Messdaten unter einer Vielzahl von Messdaten in einer zweiten Gruppe zu dem Zielzeitpunkt, um zu bewirken, dass der Zustandsindexwert, der einen schlechtesten Zustand repräsentiert, von dem Modell ausgegeben wird, wenn er dem Modell separat durch die Zuführeinheit zugeführt wird, als abnormale Messdaten in der zweiten Gruppe;
Spezifizieren, wenn die Korrelationskoeffizienten zwischen den einen Messdaten einer Vielzahl von Messdaten in einer dritten Gruppe und anderen jeweiligen Messdaten jeweils kleiner als ein Schwellenwert in einer Referenzperiode einschließlich des Zielzeitpunkts sind, der einen Messdaten als abnormale Messdaten in der dritten Gruppe;
Spezifizieren von Messdaten mit der größten Autokovarianz oder der niedrigsten Autokorrelation zu dem Zielzeitpunkt unter einer Vielzahl von Messdaten in einer vierten Gruppe als abnormale Messdaten in der vierten Gruppe; oder
Spezifizieren von Messdaten, die eine größte Differenz zwischen einem Referenzzeitpunkt und dem Zielzeitpunkt unter den jeweiligen Messdaten in einer fünften Gruppe aufweisen, als abnormale Messdaten in der fünften Gruppe, und Setzen, unter den jeweiligen Erfassungszeitpunkten, die sich auf Datensätze von zwei oder mehr Typen von Messdaten beziehen, die nicht in der fünften Gruppe eingeschlossen sind, eines Erfassungszeitpunkts eines Datensatzes, der den höchsten Annäherungsgrad an einen Datensatz zum Zielzeitpunkt aufweist, als den Referenzzeitpunkt.

2. Einrichtung (4) nach Anspruch 1, wobei
wenn die Spezifizierungseinheit (409) die abnormalen Messdaten durch Spezifizieren der einen Messdaten als abnormale Messdaten in der dritten Gruppe spezifiziert, die Spezifizierungseinheit (409) konfiguriert ist, um eine Gruppe, die drei oder mehr Typen von Messdaten einschließt, als die dritte Gruppe zu setzen und um Messdaten zu spezifizieren, die einen niedrigsten Korrelationskoeffizienten mit den einen Messdaten unter einer Vielzahl von Messdaten in der dritten Gruppe aufweisen, als abnormale Messdaten in der dritten Gruppe, wenn ein Korrelationskoeffizient zwischen den einen Messdaten und irgendwelchen anderen Messdaten unter der Vielzahl von Messdaten in der dritten Gruppe gleich oder größer als ein Schwellenwert ist.

3. Einrichtung (4) nach Anspruch 1 oder 2, wobei
die Zuführeinheit (410) konfiguriert ist, um die einzelnen abnormalen Messdaten, die für jede Gruppe durch die Spezifizierungseinheit (409) spezifiziert wurden, dem Modell zuzuführen, das konfiguriert ist, um als Reaktion auf die Eingabe der einzelnen Messdaten eines willkürlichen Kombinationsmusters, in dem ein beliebiger Typ von Messdaten für jede Gruppe ausgewählt wird, den Zustandsindexwert auszugeben.

4. Einrichtung (4) nach Anspruch 3, weiter umfassend eine Normalisierungseinheit, die konfiguriert ist, um alle in mindestens einer Gruppe enthaltenen Messdaten normalisieren, wobei
die Zuführeinheit (410) konfiguriert ist, um dem Modell abnormale Messdaten zuzuführen, die von der Normalisierungseinheit normalisiert und von der Spezifizierungseinheit für jede Gruppe spezifiziert wurden.

5. Einrichtung (4) nach Anspruch 3, weiter umfassend:
eine Normalisierungseinheit, die konfiguriert ist, um alle in mindestens einer Gruppe enthaltenen Messdaten zu normalisieren; und
eine Lernverarbeitungseinheit, die konfiguriert ist, um eine Lernverarbeitung des Modells unter Verwendung von Lerndaten durchzuführen, die Messdaten jeder Gruppe einschließen, die durch die Normalisierungseinheit und den Zustandsindexwert normalisiert wurden.

6. Einrichtung (4) nach Anspruch 1 oder 2, wobei
die Zuführeinheit (410) konfiguriert ist, um die einzelnen abnormalen Messdaten, die für jede Gruppe durch die Spezifizierungseinheit (409) spezifiziert sind, dem Modell zuzuführen, das einem Kombinationsmuster der abnormalen Messdaten aus einer Vielzahl von Modellen entspricht, einschließlich des Modells, das für jedes Kombinationsmuster von Messdaten bereitgestellt wird, die Typ für Typ aus jeder Gruppe ausgewählt werden, und konfiguriert ist, um als Reaktion auf die Eingabe der Messdaten eines entsprechenden Kombinationsmusters den Zustandsindexwert auszugeben.

7. Einrichtung (4) nach Anspruch 6, weiter umfassend eine lernende Verarbeitungseinheit, die konfiguriert ist, um für jedes Kombinationsmuster von Messdaten, die Typ für Typ aus jeder Gruppe ausgewählt werden, eine Lernverarbeitung des Modells durchzuführen, die konfiguriert ist, dass sie als Reaktion auf die Eingabe aller Messdaten des Kombinationsmusters den Zustandsindexwert auszugeben, indem sie Lerndaten verwendet, die alle in dem Kombinationsmuster eingeschlossenen Messdaten und den Zustandsindexwert einschließen.

8. Verfahren, umfassend:
Erfassen mehrerer Typen von Messdaten, die einen Zustand eines Ziels darstellen;
Erfassen von Gruppeninformationen durch:
Berechnen einer Korrelation für jede Kombination von Messdaten in der Vielzahl von Typen von Messdaten;
Gruppieren von Messdaten einer Kombination, die eine höhere Korrelation als eine Referenz aufweist; und
Erzeugen der Gruppeninformationen, die eine Gruppe von gruppierten Messdaten darstellen;
Festlegen eines Zielzeitpunkts;
Spezifizieren abnormaler Messdaten unter den Messdaten, die durch das Erfassen der Vielzahl von Messdatentypen erfasst wurden, für jede Gruppe, die durch die Gruppeninformation repräsentiert wird, zum Zielzeitpunkt;
Zuführen jedes der abnormalen Messdaten, die für jede Gruppe durch das Spezifizieren der abnormalen Messdaten zum Zielzeitpunkt spezifiziert sind, zu einem lernenden Modell, um als Reaktion auf irgendeinen Typ von Messdaten, die für jede durch die Gruppeninformation dargestellte Gruppe eingegeben werden, einen Zustandsindexwert auszugeben, der eine Qualität des Zustands des Ziels darstellt, wobei das Modell den Zustandsindexwert als Reaktion auf jedes der zugeführten abnormalen Messdaten ausgibt; und
Ausgeben eines Signals, das dem vom Modell ausgegebenen Zustandsindexwert entspricht, als Reaktion auf jede der zugeführten abnormalen Messdaten;
wobei das Spezifizieren abnormaler Messdaten die abnormalen Messdaten durch mindestens einen der folgenden Punkte spezifiziert:
Spezifizieren von Messdaten, die eine größte Differenz zwischen einer mittleren Änderungsrate in einer Referenzperiode, die den Zielzeitpunkt einschließen, und einer Änderungsrate zum Zielzeitpunkt unter einer Vielzahl von Messdaten in einer ersten Gruppe aufweisen, als abnormale Messdaten in der ersten Gruppe;
Spezifizieren von Messdaten unter einer Vielzahl von Messdaten in einer zweiten Gruppe zu dem Zielzeitpunkt, um zu bewirken, dass der Zustandsindexwert, der einen schlechtesten Zustand repräsentiert, von dem Modell ausgegeben wird, wenn er dem Modell separat durch die Zuführeinheit zugeführt wird, als abnormale Messdaten in der zweiten Gruppe;
Spezifizieren, wenn die Korrelationskoeffizienten zwischen den einen Messdaten einer Vielzahl von Messdaten in einer dritten Gruppe und anderen jeweiligen Messdaten jeweils kleiner als ein Schwellenwert in einer Referenzperiode einschließlich des Zielzeitpunkts sind, der einen Messdaten als abnormale Messdaten in der dritten Gruppe;
Spezifizieren von Messdaten mit der größten Autokovarianz oder der niedrigsten Autokorrelation zu dem Zielzeitpunkt unter einer Vielzahl von Messdaten in einer vierten Gruppe als abnormale Messdaten in der vierten Gruppe; oder
Spezifizieren von Messdaten, die eine größte Differenz zwischen einem Referenzzeitpunkt und dem Zielzeitpunkt unter den jeweiligen Messdaten in einer fünften Gruppe aufweisen, als abnormale Messdaten in der fünften Gruppe, und Setzen, unter den jeweiligen Erfassungszeitpunkten, die sich auf Datensätze von zwei oder mehr Typen von Messdaten beziehen, die nicht in der fünften Gruppe eingeschlossen sind, eines Erfassungszeitpunkts eines Datensatzes, der den höchsten Annäherungsgrad an einen Datensatz zum Zielzeitpunkt aufweist, als den Referenzzeitpunkt.

9. Programm, das konfiguriert ist, um einen Computer zu veranlassen, so zu funktionieren:
eine Messdatenerfassungseinheit (401), die konfiguriert ist, um eine Vielzahl von Typen von Messdaten zu erfassen, die einen Zustand eines Ziels darstellen;
eine Gruppeninformationserfassungseinheit (406), die zum Erfassen von Gruppeninformationen konfiguriert ist, wobei die Gruppeninformationserfassungseinheit (406) einschließt:
eine Berechnungseinheit (461), die konfiguriert ist, um eine Korrelation für jede Kombination von Messdaten in der Vielzahl von Typen von Messdaten zu berechnen, die von der Messdatenerfassungseinheit (401) erfasst werden;
eine Gruppierungseinheit (462), die konfiguriert ist, um Messdaten einer Kombination zu gruppieren, die eine höhere Korrelation als eine Referenz aufweist; und
eine Erzeugungseinheit (463), die konfiguriert ist, um die Gruppeninformationen zu erzeugen, die eine Gruppe von Messdaten darstellen, die von der Gruppierungseinheit (462) gruppiert wurden;
eine Bestimmungseinheit (408), die konfiguriert ist, um einen Zielzeitpunkt zu bestimmen;
eine Spezifizierungseinheit (409), die konfiguriert ist, um abnormale Messdaten unter den von der Messdatenerfassungseinheit (401) erfassten Messdaten für jede durch die Gruppeninformationen dargestellte Gruppe zu dem Zielzeitpunkt zu spezifizieren;
eine Zuführeinheit (410), die konfiguriert ist, um alle abnormalen Messdaten, die für jede Gruppe durch die Spezifizierungseinheit (409) zu dem Zielzeitpunkt spezifiziert wurden, einem lernenden Modell zuzuführen, um als Reaktion auf einen beliebigen Typ von Messdaten, die für jede durch die Gruppeninformation repräsentierte Gruppe eingegeben werden, einen Zustandsindexwert auszugeben, der eine Qualität eines Zustands des Ziels repräsentiert, wobei das Modell den Zustandsindexwert als Reaktion auf jede der abnormalen Messdaten ausgibt, die von der Zuführeinheit zugeführt werden; und;
eine Ausgabeeinheit (411), die konfiguriert ist, um ein Signal auszugeben, das dem von dem Modell ausgegebenen Zustandsindexwert entspricht, und zwar in Reaktion auf jede der von der Zuführeinheit zugeführten abnormalen Messdaten;
wobei die Spezifizierungseinheit (409) die abnormalen Messdaten durch mindestens eines der folgenden Merkmale spezifiziert:
Spezifizieren von Messdaten, die eine größte Differenz zwischen einer mittleren Änderungsrate in einer Referenzperiode, die den Zielzeitpunkt einschließt, und einer Änderungsrate zum Zielzeitpunkt unter einer Vielzahl von Messdaten in einer ersten Gruppe aufweisen, als abnormale Messdaten in der ersten Gruppe;
Spezifizieren von Messdaten unter einer Vielzahl von Messdaten in einer zweiten Gruppe zu dem Zielzeitpunkt, um zu bewirken, dass der Zustandsindexwert, der einen schlechtesten Zustand repräsentiert, von dem Modell ausgegeben wird, wenn er dem Modell separat durch die Zuführeinheit zugeführt wird, als abnormale Messdaten in der zweiten Gruppe;
Spezifizieren, wenn die Korrelationskoeffizienten zwischen den einen Messdaten einer Vielzahl von Messdaten in einer dritten Gruppe und anderen jeweiligen Messdaten jeweils kleiner als ein Schwellenwert in einer Referenzperiode einschließlich des Zielzeitpunkts sind, der einen Messdaten als abnormale Messdaten in der dritten Gruppe;
Spezifizieren von Messdaten mit der größten Autokovarianz oder der niedrigsten Autokorrelation zu dem Zielzeitpunkt unter einer Vielzahl von Messdaten in einer vierten Gruppe als abnormale Messdaten in der vierten Gruppe; oder
Spezifizieren von Messdaten, die eine größte Differenz zwischen einem Referenzzeitpunkt und dem Zielzeitpunkt unter den jeweiligen Messdaten in einer fünften Gruppe aufweisen, als abnormale Messdaten in der fünften Gruppe, und Setzen, unter den jeweiligen Erfassungszeitpunkten, die sich auf Datensätze von zwei oder mehr Typen von Messdaten beziehen, die nicht in der fünften Gruppe eingeschlossen sind, eines Erfassungszeitpunkts eines Datensatzes, der den höchsten Annäherungsgrad an einen Datensatz zum Zielzeitpunkt aufweist, als den Referenzzeitpunkt.

## Revendications

1. Appareil (4) comprenant :
une unité d'acquisition (401) de données de mesure configurée pour acquérir une pluralité de types de données de mesure représentant un état d'une cible ; **caractérisé en ce que** l'appareil comprend en outre
une unité d'acquisition (406) d'informations de groupe configurée pour acquérir des informations de groupe, dans lequel l'unité d'acquisition (406) d'informations de groupe comporte : une unité de calcul (461), une unité de regroupement (462) et une unité de génération (463) ;
l'unité de calcul (461) configurée pour calculer une corrélation pour chaque combinaison de données de mesure dans la pluralité de types de données de mesure acquises par l'unité d'acquisition (401) de données de mesure ;
l'unité de regroupement (462) configurée pour regrouper des données de mesure d'une combinaison présentant une corrélation supérieure à une référence ; et
l'unité de génération (463) configurée pour générer les informations de groupe représentant un groupe de données de mesure regroupées par l'unité de regroupement (462) ;
une unité de désignation (408) configurée pour désigner un point temporel cible ;
une unité de spécification (409) configurée pour spécifier des données de mesure anormales parmi les données de mesure acquises par l'unité d'acquisition (401) de données de mesure, pour chaque groupe représenté par les informations de groupe, au point temporel cible ;
une unité de fourniture (410) configurée pour fournir chacune des données de mesure anormales spécifiées pour chaque groupe par l'unité de spécification (409) au point temporel cible à un apprentissage de modèle de manière à délivrer en sortie, en réponse à un quelconque type de données de mesure qui est entré pour chaque groupe représenté par les informations de groupe, une valeur d'indice d'état représentant une qualité d'un état de la cible, dans lequel le modèle délivre en sortie la valeur d'indice d'état en réponse à chacune des données de mesure anormales fournies par l'unité de fourniture ; et
une unité de sortie (411) configurée pour délivrer en sortie un signal correspondant à la valeur d'indice d'état délivrée en sortie par le modèle en réponse à chacune des données de mesure anormales fournies par l'unité de fourniture ;
dans lequel l'unité de spécification (409) est configurée pour spécifier les données de mesure anormales par au moins l'une des opérations suivantes :
la spécification de données de mesure présentant une plus grande différence entre un taux moyen de changement dans une période de référence comportant le point temporel cible et un taux de changement au point temporel cible parmi une pluralité de données de mesure dans un premier groupe, en tant que données de mesure anormales dans le premier groupe ;
la spécification, parmi une pluralité de données de mesure dans un deuxième groupe au point temporel cible, de données de mesure pour amener la valeur d'indice d'état représentant un état le plus mauvais à être délivrée par le modèle lorsqu'elles sont fournies au modèle séparément par l'unité de fourniture, en tant que données de mesure anormales dans le deuxième groupe ;
la spécification, lorsque des coefficients de corrélation entre des premières données de mesure d'une pluralité de données de mesure dans un troisième groupe et d'autres données de mesure respectives sont chacun inférieurs à un seuil dans une période de référence comportant le point temporel cible, des premières données de mesure en tant que données de mesure anormales dans le troisième groupe ;
la spécification de données de mesure présentant la plus grande autocovariance ou la plus faible autocorrélation au point temporel cible parmi une pluralité de données de mesure dans un quatrième groupe, en tant que données de mesure anormales dans le quatrième groupe ; ou
la spécification de données de mesure présentant une plus grande différence entre un point temporel de référence et le point temporel cible parmi des données de mesure respectives dans un cinquième groupe, en tant que données de mesure anormales dans le cinquième groupe, et l'établissement, parmi des points temporels d'acquisition respectifs relatifs à des ensembles de données de deux ou plus types de données de mesure non incluses dans le cinquième groupe, d'un point temporel d'acquisition d'un ensemble de données présentant le degré d'approximation le plus élevé par rapport à un ensemble de données au point temporel cible, en tant que point temporel de référence.

2. Appareil (4) selon la revendication 1, dans lequel
lorsque l'unité de spécification (409) spécifie les données de mesure anormales en spécifiant les premières données de mesure en tant que données de mesure anormales dans le troisième groupe, l'unité de spécification (409) est configurée pour établir un groupe incluant trois ou plus types de données de mesure en tant que troisième groupe, et pour spécifier des données de mesure présentant un coefficient de corrélation le plus faible avec les premières données de mesure parmi une pluralité de données de mesure dans le troisième groupe, en tant que données de mesure anormales dans le troisième groupe, lorsqu'un coefficient de corrélation entre les premières données de mesure et de quelconques autres données de mesure parmi la pluralité de données de mesure dans le troisième groupe est égal ou supérieur à un seuil.

3. Appareil (4) selon la revendication 1 ou la revendication 2, dans lequel
l'unité de fourniture (410) est configurée pour fournir chacune des données de mesure anormales spécifiées pour chaque groupe par l'unité de spécification (409) au modèle configuré pour délivrer en sortie, en réponse à chacune des données de mesure d'un motif de combinaison arbitraire dans lequel un quelconque type de données de mesure est sélectionné pour chaque groupe qui est entré, la valeur d'indice d'état.

4. Appareil (4) selon la revendication 3, comprenant en outre une unité de normalisation configurée pour normaliser chacune des données de mesure incluses dans au moins un groupe, dans lequel
l'unité de fourniture (410) est configurée pour fournir, au modèle, des données de mesure anormales normalisées par l'unité de normalisation et spécifiées pour chaque groupe par l'unité de spécification.

5. Appareil (4) selon la revendication 3, comprenant en outre :
une unité de normalisation configurée pour normaliser chacune des données de mesure incluses dans au moins un groupe ; et
une unité de traitement d'apprentissage configurée pour effectuer un traitement d'apprentissage du modèle en utilisant des données d'apprentissage incluant des données de mesure de chaque groupe normalisées par l'unité de normalisation et la valeur d'indice d'état.

6. Appareil (4) selon la revendication 1 ou la revendication 2, dans lequel
l'unité de fourniture (410) est configurée pour fournir chacune des données de mesure anormales spécifiées pour chaque groupe par l'unité de spécification (409) au modèle correspondant à un motif de combinaison des données de mesure anormales parmi une pluralité de modèles incluant le modèle fourni pour chaque motif de combinaison de données de mesure sélectionnées type par type à partir de chaque groupe, et configurée pour délivrer en sortie, en réponse à chacune des données de mesure d'un motif de combinaison correspondant qui est entré, la valeur d'indice d'état.

7. Appareil (4) selon la revendication 6, comprenant en outre une unité de traitement d'apprentissage configurée pour effectuer, pour chaque motif de combinaison de données de mesure sélectionnées type par type à partir de chaque groupe, un traitement d'apprentissage du modèle configuré pour délivrer en sortie, en réponse à chacune des données de mesure du motif de combinaison qui est entré, la valeur d'indice d'état en utilisant des données d'apprentissage incluant chacune des données de mesure incluses dans le motif de combinaison et la valeur d'indice d'état.

8. Procédé comprenant :
l'acquisition d'une pluralité de types de données de mesure représentant un état d'une cible ;
l'acquisition d'informations de groupe en :
calculant une corrélation pour chaque combinaison de données de mesure dans la pluralité de types de données de mesure ;
le regroupement de données de mesure d'une combinaison présentant une corrélation plus élevée qu'une référence ; et
la génération des informations de groupe représentant un groupe de données de mesure regroupées ;
la désignation d'un point temporel cible ;
la spécification de données de mesure anormales parmi les données de mesure acquises par l'acquisition de la pluralité de types de données de mesure, pour chaque groupe représenté par les informations de groupe, au point temporel cible ;
la fourniture de chacune des données de mesure anormales spécifiées pour chaque groupe en spécifiant les données de mesure anormales au point temporel cible à un apprentissage de modèle de manière à délivrer en sortie, en réponse à un quelconque type de données de mesure qui est entré pour chaque groupe représenté par les informations de groupe, une valeur d'indice d'état représentant une qualité d'un état de la cible, dans lequel le modèle délivre en sortie la valeur d'indice d'état en réponse à chacune des données de mesure anormales fournies ; et
la sortie d'un signal correspondant à la valeur d'indice d'état délivrée en sortie par le modèle en réponse à chacune des données de mesure anormales fournies ;
dans lequel la spécification des données de mesure anormales spécifie les données de mesure anormales par au moins une des opérations suivantes :
la spécification de données de mesure présentant une plus grande différence entre un taux moyen de changement dans une période de référence comportant le point temporel cible et un taux de changement au point temporel cible parmi une pluralité de données de mesure dans un premier groupe, en tant que données de mesure anormales dans le premier groupe ;
la spécification, parmi une pluralité de données de mesure dans un deuxième groupe au point temporel cible, de données de mesure pour amener la valeur d'indice d'état représentant un état le plus mauvais à être délivrée par le modèle lorsqu'elles sont fournies au modèle séparément par l'unité de fourniture, en tant que données de mesure anormales dans le deuxième groupe ;
la spécification, lorsque des coefficients de corrélation entre des premières données de mesure d'une pluralité de données de mesure dans un troisième groupe et d'autres données de mesure respectives sont chacun inférieurs à un seuil dans une période de référence incluant le point temporel cible, des premières données de mesure en tant que données de mesure anormales dans le troisième groupe ;
la spécification de données de mesure présentant la plus grande autocovariance ou la plus faible autocorrélation au point temporel cible parmi une pluralité de données de mesure dans un quatrième groupe, en tant que données de mesure anormales dans le quatrième groupe ; ou
la spécification de données de mesure présentant une plus grande différence entre un point temporel de référence et le point temporel cible parmi des données de mesure respectives dans un cinquième groupe, en tant que données de mesure anormales dans le cinquième groupe, et l'établissement, parmi des points temporels d'acquisition respectifs relatifs à des ensembles de données de deux ou plus types de données de mesure non incluses dans le cinquième groupe, d'un point temporel d'acquisition d'un ensemble de données présentant le degré d'approximation le plus élevé par rapport à un ensemble de données au point temporel cible, en tant que point temporel de référence.

9. Programme configuré pour amener un ordinateur à fonctionner comme :
une unité d'acquisition (401) de données de mesure configurée pour acquérir une pluralité de types de données de mesure représentant un état d'une cible ;
une unité d'acquisition (406) d'informations de groupe configurée pour acquérir des informations de groupe, dans lequel l'unité d'acquisition (406) d'informations de groupe inclut :
une unité de calcul (461) configurée pour calculer une corrélation pour chaque combinaison de données de mesure dans la pluralité de types de données de mesure acquises par l'unité d'acquisition (401) de données de mesure ;
une unité de regroupement (462) configurée pour regrouper des données de mesure d'une combinaison présentant une corrélation supérieure à une référence ; et
une unité de génération (463) configurée pour générer les informations de groupe représentant un groupe de données de mesure regroupées par l'unité de regroupement (462) ;
une unité de désignation (408) configurée pour désigner un point temporel cible ;
une unité de spécification (409) configurée pour spécifier des données de mesure anormales parmi les données de mesure acquises par l'unité d'acquisition (401) de données de mesure, pour chaque groupe représenté par les informations de groupe, au point temporel cible ;
une unité de fourniture (410) configurée pour fournir chacune des données de mesure anormales spécifiées pour chaque groupe par l'unité de spécification (409) au point temporel cible à un apprentissage de modèle de manière à délivrer en sortie, en réponse à un quelconque type de données de mesure qui est entré pour chaque groupe représenté par les informations de groupe, une valeur d'indice d'état représentant une qualité d'un état de la cible, dans lequel le modèle délivre en sortie la valeur d'indice d'état en réponse à chacune des données de mesure anormales fournies par l'unité de fourniture ; et
une unité de sortie (411) configurée pour délivrer en sortie un signal correspondant à la valeur d'indice d'état délivrée en sortie par le modèle en réponse à chacune des données de mesure anormales fournies par l'unité de fourniture ;
dans lequel l'unité de spécification (409) spécifie les données de mesure anormales par au moins une des opérations suivantes :
la spécification de données de mesure présentant une plus grande différence entre un taux moyen de changement dans une période de référence comportant le point temporel cible et un taux de changement au point temporel cible parmi une pluralité de données de mesure dans un premier groupe, en tant que données de mesure anormales dans le premier groupe ;
la spécification, parmi une pluralité de données de mesure dans un deuxième groupe au point temporel cible, de données de mesure pour amener la valeur d'indice d'état représentant un état le plus mauvais à être délivrée par le modèle lorsqu'elles sont fournies au modèle séparément par l'unité de fourniture, en tant que données de mesure anormales dans le deuxième groupe ;
la spécification, lorsque des coefficients de corrélation entre des premières données de mesure d'une pluralité de données de mesure dans un troisième groupe et d'autres données de mesure respectives sont chacun inférieurs à un seuil dans une période de référence incluant le point temporel cible, des premières données de mesure en tant que données de mesure anormales dans le troisième groupe ;
la spécification de données de mesure présentant la plus grande autocovariance ou la plus faible autocorrélation au point temporel cible parmi une pluralité de données de mesure dans un quatrième groupe, en tant que données de mesure anormales dans le quatrième groupe ; ou
la spécification de données de mesure présentant une plus grande différence entre un point temporel de référence et le point temporel cible parmi des données de mesure respectives dans un cinquième groupe, en tant que données de mesure anormales dans le cinquième groupe, et l'établissement, parmi des points temporels d'acquisition respectifs relatifs à des ensembles de données de deux ou plus types de données de mesure non incluses dans le cinquième groupe, d'un point temporel d'acquisition d'un ensemble de données présentant le degré d'approximation le plus élevé par rapport à un ensemble de données au point temporel cible, en tant que point temporel de référence.
